# EUROPÄISCHE PATENTSCHRIFT

(11) **EP 2 136 098 B1**
(45) Veröffentlichungstag und Bekanntmachung des Hinweises auf die Patenterteilung: **02.07.2014**
(21) Anmeldenummer: 09159716.1
(22) Anmeldetag: 08.05.2009
(51) Int. Cl.: F16D 23/02

(54) **Synchronring, sowie ein Zahnräderwechselgetriebe für ein Fahrzeug**
Synchronising ring and a cog-wheel gearbox for a motor vehicle
Bague de synchronisation ainsi que boîte manuelle à engrenages pour un véhicule

(30) Priorität: 18.06.2008 EP 08158459
(43) Veröffentlichungstag der Anmeldung: 23.12.2009
(73) Patentinhaber: Sulzer Friction Systems (Germany) GmbH, 28719 Bremen (DE)
(72) Erfinder: Christoffer, Ulf, 28717, Bremen (DE); Spreckels, Marcus, Dr., 28876 Oyten (DE)
(74) Vertreter: Intellectual Property Services GmbH

(56) Entgegenhaltungen:
- EP-A- 0 821 175
- EP-A- 1 900 955
- DE-A1- 3 519 811
- DE-A1-102008 023 031
- GB-A- 2 357 815

## Beschreibung

Die Erfindung betrifft einen Synchronring für eine Synchronisiereinrichtung eines schaltbaren Zahnräderwechselgetriebes sowie ein Zahnräderwechselgetriebe für ein Fahrzeug gemäss dem Oberbegriff der unabhängigen Ansprüche 1 und 13.

Synchronringe dienen in einem mechanischen schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen von Synchronringen, die in der Regel aus einem Metall oder einer Metallegierung, wie beispielsweise aus Messing oder Stahl gefertigt sind, mit einer Reibschicht zu versehen. Dabei sind ganz verschiedene Typen von Reibschichten im Gebrauch, z.B. thermische Spritzschichten aus Molybdän, Carbon-Reibschichten oder Reibschichten aus anderen Materialien.

Die nicht vorveröffentlichte WO 2009/135626 A1 beschreibt einen Synchronring aus Blech mit einem kegelförmigen Ringkörper, mit einer Aussenverzahnung zur Sperrung einer Axialbewegung einer Schiebemuffe und mit wenigsten eine in Axialrichtung abgewinkelten Verdrehsicherung in Form eines Indexlappens. Der Indexlappen begrenzt eine Verdrehung des Synchronrings in einer Synchronnabe, wobei der Indexlappen an wenigsten einer Seite eine Lappenerweiterung aufweist, die sich auf einer der Aussenverzahung abgewandten Seite in Umfangsrichtung erstreckt.

In der gattungsgemässen DE 35 19811 A1 ist ein Träger für einen konusförmigen Synchronring beschrieben, der einen drei geteilten äusseren Zahnkranzring aufweist und in einem zylindrischen Hohlraum einer Synchronringnabe, die häufig auch als Synchronringkörper bezeichnet wird, angeordnet ist und über Anschläge, die als Lappen ausgebildet sind, mit der Synchronringnabe im wesentlichen drehfest verankert ist. Im wesentlichen drehfest bedeutet dabei im Rahmen dieser Anmeldung, dass bis auf kleine Winkelauslenkungen in Umfangsrichtung der Synchronring drehfest mit der Synchronringnabe verbunden ist.

Die DE 198 53 856 A1 beschreibt eine Fortbildung des zuvor beschriebenen Synchronrings, wobei sich der Synchronring der DE 198 53 856 A1 dadurch auszeichnet, dass dessen Breite im wesentlichen nur durch die erforderliche Breite seiner Reibfläche bestimmt wird. Dies wird dadurch erreicht, dass ein Anschlag, die funktionell den Lappen gemäss DE 35 19811 A1 entsprechen, an oder nahe an einem Endabschnitt des Ringkörpers mit einem kleineren Konusdurchmesser angeordnet ist, sowie die Kontur des Anschlags in radialer Richtung über die Kontur der Aussenmantelfläche des Ringkörpers hervorsteht.

Beide Synchronringe sind zwar im Betriebszustand gegen eine Verdrehung gegenüber der Synchronringnabe durch die Lappen oder Anschläge im Prinzip gut gesichert, jedoch fehlt es beiden an einer zuverlässigen Führung in radialer Richtung im zylindrischen Hohlraum in der Synchronringnabe.

Das heisst, gegen eine Verdrehung in Umfangsrichtung in Bezug auf die Synchronringnabe sind die aus dem Stand der Technik bekannten Synchronringe zwar gesichert, jedoch neigen diese Ringe aufgrund ihrer konischen äusseren Form, die mit einer zylindrischen inneren Kontaktfläche im zylindrischen Hohlraum der Synchronringnabe zusammenwirkt, verstärkt zu unkontrollierten Bewegungen, z.B. zu kleinen radialen Auslenkungen oder Kippbewegungen, die sich z.B. in unangenehmen Vibrationen äussern können, damit die Zuverlässigkeit und Genauigkeit des Synchronisationsvorgangs negativ beeinflussen, was zu einer Erhöhung der Schaltzeiten führen kann, zu schnellerem und erhöhtem Verschleiss der Reibfläche und des gesamten Synchronrings als solchem führt, und somit zu kürzeren Reparatur- und Wartungsintervallen führt, ganz abgesehen davon, dass durch die schlechte Führung des Synchronrings im Hohlraum der Synchronringnabe und den daraus resultierenden unkontrollierten Bewegungen der Schalt- und Fahrkomfort eines Kraftfahrzeugs deutlich eingeschränkt wird. Diese Effekte werden umso bedeutender, je mehr Leistung bzw. Drehmoment durch ein entsprechendes Getriebe geschaltet werden muss.

Das Problem bei aus umgeformten Stahlblechen hergestellten Synchronringen besteht nämlich hauptsächlich darin, dass es nicht möglich ist eine zylindrische Aussenseite zu bilden, da beim Umformen eine konische Reibfläche erzeugt werden muss. Bisher wurde mehr oder weniger erfolgreich versucht dieses Problem zu entschärfen. So wurde zum Beispiel versucht die Führung des Synchronrings im zylindrischen Hohlraum der Synchronringnabe dadurch zu verbessern, dass die konische Aussenseite der Reibfläche durch Aufdicken oder durch Umbiegen von zusätzlichen Laschen an die zylindrische Form der Synchronringnabe angepasst wurde. Diese bekannten Lösungen haben jedoch einige wesentliche Nachteile, z.B. was die Fertigung aber vor allem auch die Steifigkeit des Synchronrings betrifft.

Eine wesentliche Verbesserung wurde daher von der Anmelderin bereits mit der EP 1 900 955 A1 vorgeschlagen.

Diese Erfindung betrifft einen Synchronring für eine Synchronisiereinrichtung eines schaltbaren Zahnräderwechselgetriebes, wobei zur Fixierung des Synchronrings in einem zylindrischen Hohlraum einer Synchronringnabe eine Verdrehsicherung vorgesehen ist, die integral mit dem Ringkörper verbunden ist und sich von der Zahnradfläche des Ringkörpers in Richtung zur Nabenfläche erstreckt. Zur Führung der Einbaufläche im Hohlraum der Synchronringnabe ist dabei am Ringkörper in einem vorgebbaren Bereich zwischen der Zahnradfläche und der Nabenfläche ein Führungselement vorgesehen.

Wesentlich für diese Erfindung ist es, dass zur Abstützung bzw. Zentrierung und Führung der Einbaufläche an einer Innenfläche des zylindrischen Hohlraums der Synchronringnabe am Ringkörper in einem vorgebbaren Bereich zwischen der Zahnradfläche und der Nabenfläche ein Führungselement vorgesehen ist, das bevorzugt in Form von mehreren Ausbeulungen, die über die Einbaufläche in Umfangsrichtung verteilt sind, bereitgestellt wird.

Zur Erläuterung ist in Fig. 1 ein einfaches Ausführungsbeispiel des aus der EP 1 900 955 bekannten Synchronrings schematisch dargestellt. Fig. 2 zeigt den Synchronring der Fig. 1 im Einbauzustand.

Zur besseren Unterscheidung der vorliegenden Erfindung vom Stand der Technik sind in den Fig. 1 und Fig. 2, die den Stand der Technik zeigen, die Bezugszeichen mit einem Hochkomma versehen, während die Bezugszeichen der Fig. 3 bis Fig. 7, die erfindungsgemässe Ausführungsbeispiele zeigen, kein Hochkomma tragen.

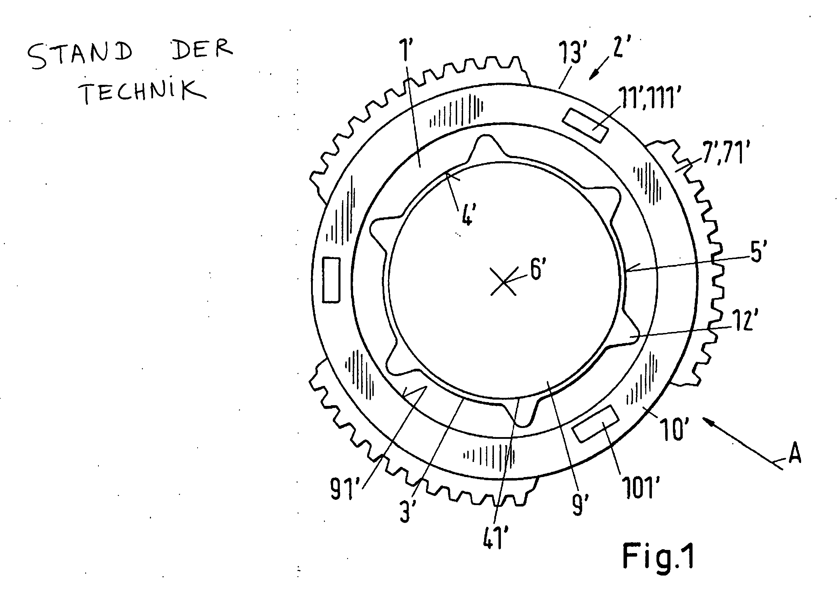

Der bekannte Synchronring 1' der Fig. 1 umfasst einen konischen Ringkörper 3' mit einer inneren Reibfläche 4' mit Carbon-Reibbelag 41' und einer äusseren Einbaufläche 5', die den Ringkörper 3' in einer radialen Umfangsrichtung jeweils begrenzen. Die äussere Einbaufläche 5' und die innere Reibfläche 4' erstrecken sich im wesentlichen parallel zueinander unter einem vorgebbaren Reibwinkel α∋, der in Fig. 1 nicht zu sehen ist, konisch um eine axiale Synchronringachse 6' des Synchronrings 1'.

Dabei ist der Ringkörper 3' in axialer Richtung an einem grössten Konusdurchmesser d1' durch eine im wesentlichen sich senkrecht zur Synchronringachse 6' erstreckenden Zahnradfläche 7' mit Zahnrad 71' begrenzt, und an einem kleinsten Konusdurchmesser d2' durch eine Nabenfläche 8' begrenzt. Zur Fixierung des Synchronrings 1' in einem zylindrischen Hohlraum 9' einer Synchronringnabe 10', die in Fig. 1 nicht dargestellt ist, ist eine Verdrehsicherung 11' vorgesehen, die integral mit dem Ringkörper 3' verbunden ist und sich von der Zahnradfläche 7' des Ringkörpers 3' in Richtung zur Nabenfläche 8' erstreckt, eine Konstruktion, wie sie im Prinzip aus dem Stand der Technik bereits seit langem bekannt ist. Dabei ist die Verdrehsicherung 11' gemäss Fig. 1 eine Sicherungslasche 111', die zum Beispiel bei der Herstellung des Synchronrings 1' durch Umbiegen eines vom Ringkörper 3' zunächst noch radial nach aussen stehenden Abschnitts in Richtung zur Einbaufläche 5' gebildet sein kann.

Das heisst, die Verdrehsicherung 11', die als Sicherungslasche 111' ausgebildet ist, erstreckt sich auf der der Synchronringachse 6' abgewandten Seite des Ringkörpers 3' im wesentlichen gleichgerichtet zur Einbaufläche 5'.

Die Sicherungslasche 111' ist derart ausgebildet und in Bezug auf die Einbaufläche 5' angeordnet, dass die Sicherungslasche 111' im Einbauzustand in einer entsprechenden Ausnehmung 101' der Synchronringnabe 10' verankerbar ist.

Zur Führung der Einbaufläche 5' an einer Innenfläche 91' des zylindrischen Hohlraums 9' der Synchronringnabe 10' ist am Ringkörper 3' in einem vorgebbaren Bereich zwischen der Zahnradfläche 7' und der Nabenfläche 8' ein Führungselement 12' vorgesehen, das in Form einer Ausbeulung 12' des Ringkörpers 3' an der Einbaufläche 5' ausgebildet ist, wobei sich die Ausbeulung 12' von der Synchronringachse 6' radial weg nach aussen erstreckt.

Das heisst ein wesentliches Merkmal des bekannten Synchronrings 1' gemäss EP 1 900 955 A1 ist darin zu sehen, dass die das Führungselement 12' unmittelbar am Ringkörper 3' selbst in Form einer Ausbeulung 12' vorgesehen ist, das heisst, die Ausbildung des Führungselements 12' beeinträchtigt bzw. verändert zumindest die Geometrie, eventuell aber auch mechanische Eigenschaften wie Steifigkeit und Festigkeit des bekannten Synchronrings 1'.

Im Einbauzustand des Synchronrings 1' zentrieren und führen die Ausbeulungen 12' dann den Synchronring 1' sicher und zuverlässig in dem in der Synchronringnabe 10' zur Aufnahme der Einbaufläche 5' vorgesehenen zylindrischen Hohlraum 9'.

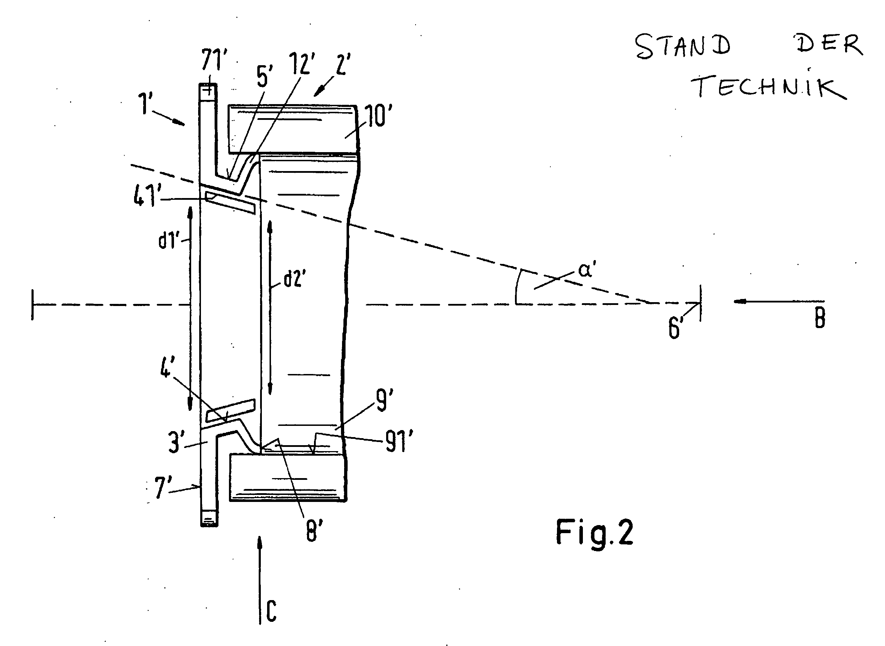

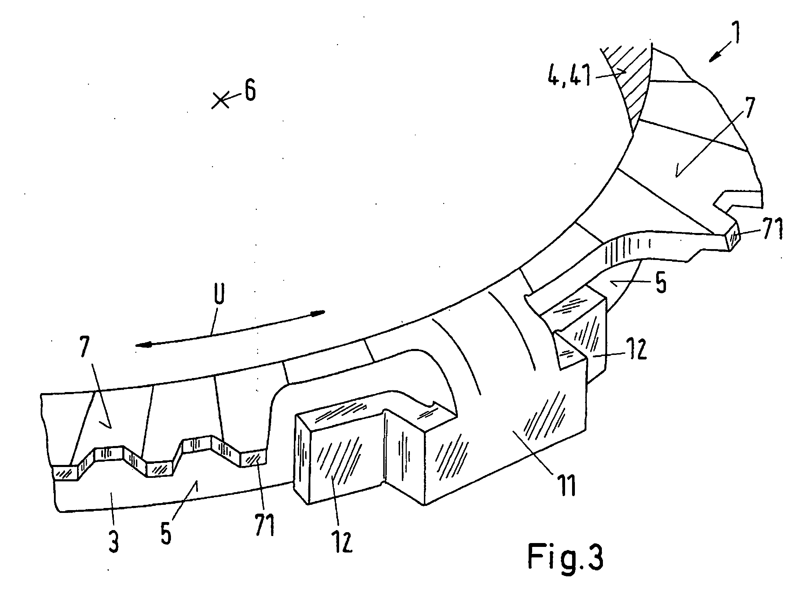

Zum besseren Verständnis des Zusammenwirkens zwischen Synchronring 1' und Synchronringnabe 10' ist in Fig. 2 eine Seitenansicht eines Synchronrings 1' gemäss Fig. 1 im Einbauzustand schematisch dargestellt. Der Schnitt ist dabei entlang dem Pfeil A gemäss Fig. 3 gerade so gewählt, dass die Sicherungslasche 111' nicht zu sehen ist.

Der konische Ringkörper 3' mit seiner inneren Reibfläche 4', die im vorliegenden Beispiel einen Carbon-Reibbelag 41' aufweist, und der äusseren Einbaufläche 5', erstrecken sich unter dem Reibwinkel α∋ konisch und im wesentlichen parallel zueinander um die axiale Synchronringachse 6' des Synchronrings 1'.

Der Synchronring 1' ist durch die Führungselemente 12', die als Ausbeulungen 12' vorgesehen sind, mit der Einbaufläche 5' im Hohlraum 9' der Synchronringnabe 10' zentriert gelagert.

Die Zahnradfläche 7' mit Zahnrad 71' befindet sich ausserhalb der Synchronringnabe 10', so dass das Zahnrad 71' mit einem weiteren, in Fig. 2 nicht gezeigten Zahnrad eines ebenfalls nicht gezeigten schaltbaren Zahnräderwechselgetriebes in drehfesten Eingriff treten kann.

Obwohl der Synchronring gemäss EP 1 900 955 die zuvor aus dem Stand der Technik bekannten Probleme hervorragend löst, besteht dennoch ein gewisser Verbesserungsbedarf. Zwar zeigt der Synchronring gemäss EP 1 900 955 hervorragende Laufeigenschaften im Betriebszustand und ist im Betriebszustand überaus stabil in der Synchronringnabe geführt.

Allerdings gehen die Ausbeulungen, die über die Einbauflächen verteilt sind, natürlich zu Lasten der Reibfläche.

Die Aufgabe der Erfindung ist es daher, einen verbesserten Synchronring bereitzustellen, der optimal in der Synchronringnabe geführt ist, so dass im Betriebszustand keine unkontrollierten Relativbewegungen zwischen Synchronring und Synchronringnabe während und / oder ausserhalb des Synchronisationsvorgangs auftreten. Gleichzeitig soll dabei die konische Reibfläche nicht durch Ausbeulungen, Aufdickungen oder der gleichen verändert sein. Darüber hinaus soll ein entsprechend verbessertes Zahnräderwechselgetriebe zur Verfügung gestellt werden.

Die diese Aufgaben lösenden Gegenstände der Erfindung sind durch die Merkmale der unabhängigen Ansprüche 1 und 12 gekennzeichnet.

Die abhängigen Ansprüche beziehen sich auf besonders vorteilhafte Ausführungsformen der Erfindung.

Die Erfindung betrifft somit einen Synchronring für eine Synchronisiereinrichtung eines Zahnräderwechselgetriebes, umfassend einen konischen Ringkörper mit einer inneren Reibfläche und einer äusseren Einbaufläche, die den Ringkörper in einer radialen Umfangsrichtung, die senkrecht zu einer axialen Synchronringachse verläuft, jeweils begrenzen, und sich unter einem vorgebbaren Reibwinkel konisch um die axiale Synchronringachse des Synchronrings erstrecken. Dabei ist der Ringkörper in axialer Richtung an einem grössten Konusdurchmesser durch eine im wesentlichen sich senkrecht zur Synchronringachse erstreckenden Zahnradfläche mit Zahnrad begrenzt, und an einem kleinsten Konusdurchmesser durch eine Nabenfläche begrenzt, und zur Fixierung des Synchronrings ist im Einbauszustand in einem zylindrischen Hohlraum einer Synchronringnabe eine Verdrehsicherung vorgesehen, die integral mit dem Ringkörper verbunden ist und sich in eine Richtung von der Zahnradfläche des Ringkörpers weg erstreckt, wobei zur Führung der Einbaufläche im zylindrischen Hohlraum an der Verdrehsicherung ein Führungselement vorgesehen ist. Erfindungsgemäss erstreckt sich das Führungselement ausgehend von der Verdrehsicherung in der Umfangsrichtung. Zudem ist auf der Reibfläche ein reibungsoptimiertes Reibungsmittel, insbesondere eine Reibbeschichtung, im speziellen eine Molybdänbeschichtung und / oder ein Reibbelag, insbesondere ein Carbon-Reibbelag und / oder ein anderes Reibungsmittel vorgesehen.

Wesentlich für die Erfindung ist es, dass zur Abstützung bzw. Zentrierung und Führung der Einbaufläche an einer Innenfläche des zylindrischen Hohlraums der Synchronringnabe ein Führungselement an der Verdrehsicherung vorgesehen ist, das sich auf einer der Zahnradfläche abgewandten Seite der Verdrehsicherung entlang der Verdrehsicherung in Umfangsrichtung erstreckt.

Dadurch, dass die Führungselemente an den Verdrehsicherungen vorgesehen sind, ist ein erfindungsgemässer Synchronring gleichzeitig gegen eine Verdrehung gegenüber der Synchronringnabe durch die Verdrehsicherungen hervorragend gesichert, und ist gleichzeitig zuverlässig, insbesondere in Bezug auf die radiale Richtung im zylindrischen Hohlraum in der Synchronringnabe geführt und zentriert. Dabei wird die konische Reibfläche in keiner Weise durch die Führungselemente beeinträchtigt, da die Führungselemente abseits von der konischen Reibfläche an den Verdrehsicherungen vorgesehen sind.

Das heisst, ein erfindungsgemässer Synchronring neigt aufgrund seiner konischen äusseren Form, die mit einen zylindrischen inneren Kontaktfläche im zylindrischen Hohlraum der Synchronringnabe zusammenwirkt, nicht mehr, wie die aus dem Stand der Technik bekannten konischen Synchronringe, zu unkontrollierten Bewegungen, z.B. zu kleinen radialen Auslenkungen oder Kippbewegungen, die sich z.B. in unangenehmen Vibrationen äussern können. Gleichzeitig wird die Reibfläche bzw. der Ringkörper in keiner Weise beeinträchtigt. Dass heisst, der Ringkörper behält seine volle Stabilität und die gesamte konische Reibfläche steht für den Synchronisiervorgang zur Verfügung. Dadurch wird die Zuverlässigkeit und Genauigkeit des Synchronisationsvorgangs durch Verwendung eines erfindungsgemässen Synchronrings deutlich positiv beeinflusst, was zu einer Erniedrigung der Schaltzeiten betragen kann, den Verschleiss an der Reibfläche und des gesamten Synchronrings als solchem reduziert und somit zu längeren Reparatur- und Wartungsintervallen beiträgt, ganz abgesehen davon, dass durch die hervorragende Führung des erfindungsgemässen Synchronrings im Hohlraum der Synchronringnabe der Schalt- und Fahrkomfort eines Kraftfahrzeugs deutlich erhöht wird. Diese positiven Effekte wirken sich umso stärker aus, je mehr Leistung bzw. Drehmoment durch ein entsprechendes Getriebe geschaltet werden muss.

In der Praxis ist das Führungselement meist ein integraler Bestandteil der Verdrehsicherung und wird zusammen mit dieser beim Umformprozess z.B. aus einem Stahlblech erzeugt.

In einem speziellen Ausführungsbeispiel erstreckt sich das Führungselement ausgehend von der Verdrehsicherung in der Umfangsrichtung in zwei entgegen gesetzte Richtungen, so dass ein verhältnismässig breiter sattelförmiger Bereich entsteht, welcher die sichere Führung des Synchronrings im zylindrischen Hohlraum der Synchronringnabe zuverlässig garantiert.

Dabei ist es auch möglich, dass sich das Führungselement ausgehend von der Verdrehsicherung in der Umfangsrichtung asymmetrisch nur in eine Umfangsrichtung erstreckt, wobei insbesondere drei Verdrehsicherungen mit jeweils einem Führungselement vorgesehen sind. Das heisst, es ist auch möglich, dass das Führungselement in Form einer Zentrierlasche nur auf einer Seite der Verdrehsicherung vorgesehen ist, was den Konstruktionsaufwand und den Materialaufwand entsprechend reduziert.

Bei einem anderen speziellen Ausführungsbeispiel erstreckt sich das Führungselement in einem Bereich zwischen der Verdrehsicherung und der äusseren Einbaufläche in Richtung der Umfangsrichtung.

Auch ist es möglich, dass sich das Führungselement auf einer der Zahnradfläche abgewandten Seite der Verdrehsicherung entlang der Verdrehsicherung in Umfangsrichtung erstreckt, oder zum Beispiel, dass die Verdrehsicherung mit dem Führungselement über eine Brücke verbunden ist und an einer Haltelasche vorgesehen ist.

Welche spezielle Ausführungsform in der konkreten Anwendung gewählt wird, kann zum Beispiel von der mechanischen Belastung im Betriebszustand oder von geometrischen Vorgaben durch die übrigen Teil eines Getriebes, wie zum Beispiel von der konkreten geometrischen Ausgestaltung der übrigen Teile des Getriebes abhängen oder von anderen konkreten Randbedingungen bestimmt sein.

Wesentlich ist, dass die Führungselemente direkt an den Verdrehsicherungen vorgesehen sind und nicht an der Reibfläche bzw. am Ringkörper und auch nicht aufwändig als separate Laschen ausgebildet sind.

In einem speziellen Ausführungsbeispiel ist die Zahnradfläche durch eine Ausnehmung, insbesondere durch eine, oder zwei, oder drei, oder mehr als drei Ausnehmungen unterbrochen, und / oder die Verdrehsicherung ist in der Ausnehmung mit dem Ringkörper verbunden.

Dabei sind bevorzugt, aber nicht notwendig, ebenso viele Verdrehsicherungen wie Ausnehmungen in der Zahnradfläche vorgesehen. In einem für die Praxis besonders wichtigen Ausführungsbeispiel sind genau drei Verdrehsicherungen vorgesehen, die bei minimalem konstruktivem Aufwand ein Maximum an Verdrehsicherung und Führung durch die Führungselemente garantieren.

Insbesondere kann die Verdrehsicherung als Sicherungslasche ausgebildet sein, die sich auf der der Synchronringachse abgewandten Seite des Ringkörpers im wesentlichen gleichgerichtet zur Einbaufläche erstreckt.

In einem ganz speziellen Ausführungsbeispiel kann die Sicherungslasche eine Sicherungslasche mit einer taschenförmigen Ausnehmung sein, wodurch im Einzelfall eine verbesserte Verankerung des Synchronrings in der Synchronringnabe erreichbar ist.

Konstruktiv ist der Synchronring ein aus einem tiefziehbaren Blech hergestelltes Blechumformteil und / oder aus einem Stahl, vorzugsweise aus C55, C80 oder C80M Stahl, insbesondere aus C35 oder C45 Stahl gefertigt.

Die Erfindung bezieht sich weiter auf ein Schaltgetriebe für ein Fahrzeug, insbesondere für einen Personenkraftwagen, einen Lastkraftwagen mit einem Synchronring nach einem der vorangehenden Ansprüche.

Im Folgenden wird die Erfindung an Hand der schematischen Zeichnung näher erläutert. Es zeigen:
- Fig. 1: ein aus dem Stand der Technik bekannter Synchronring im Schnitt;
- Fig. 2: eine Seitenansicht des Synchronrings gemäss Fig. 1 im Einbauzustand;
- Fig. 3: ein erstes Ausführungsbeispiel eines erfindungsgemässen Synchronrings;

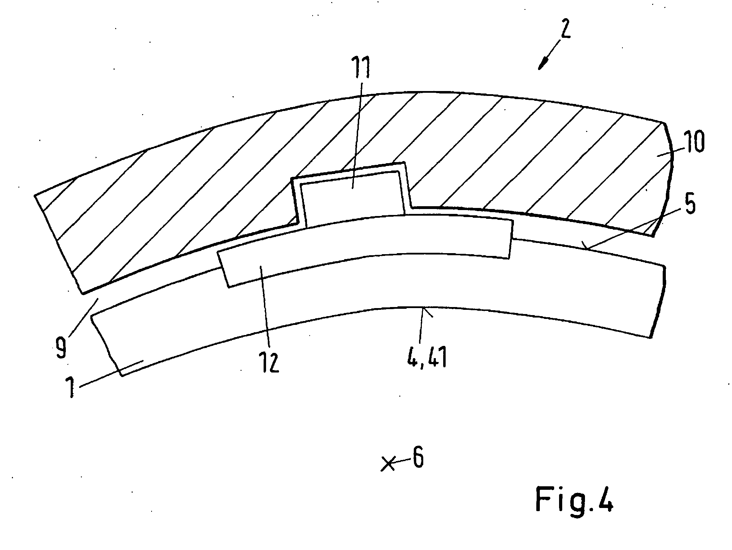

- Fig. 4: der Synchronring der Fig. 3 im Einbauzustand;

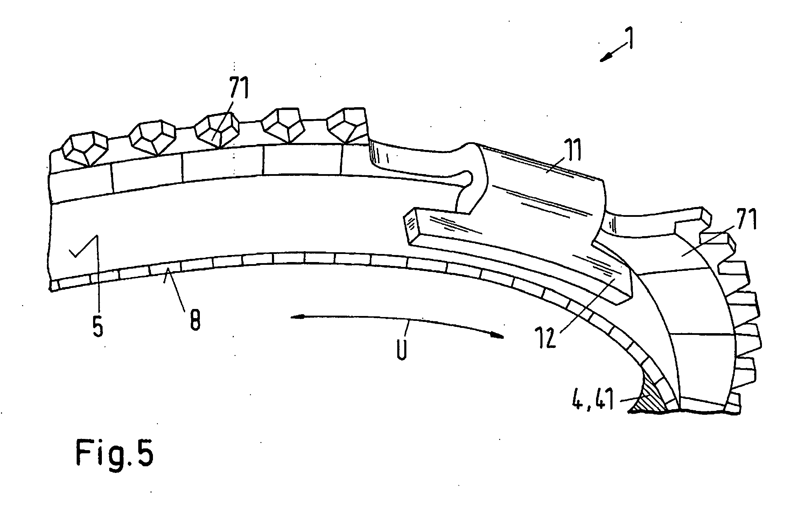

- Fig. 5: ein zweites Ausführungsbeispiel eines erfindungsgemässen Synchronrings;

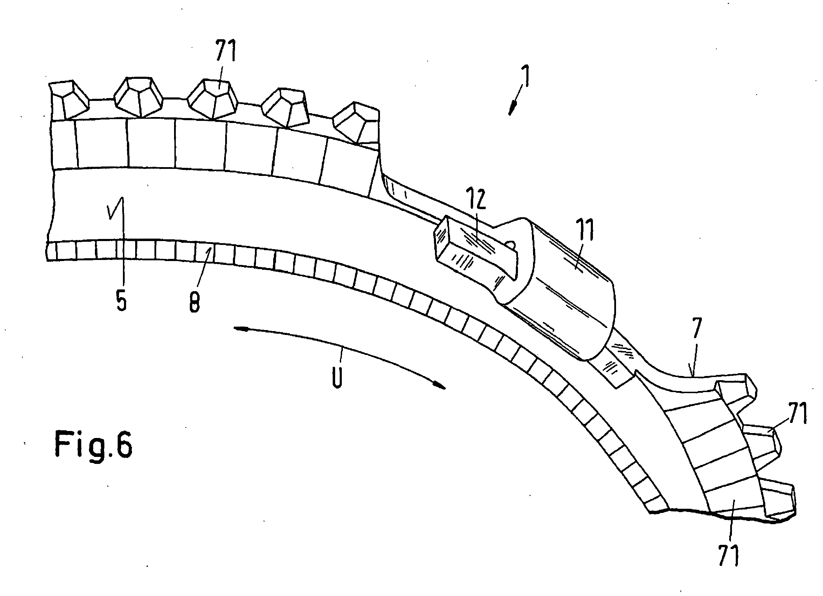

- Fig. 6: ein drittes Ausführungsbeispiel eines erfindungsgemässen Synchronrings;

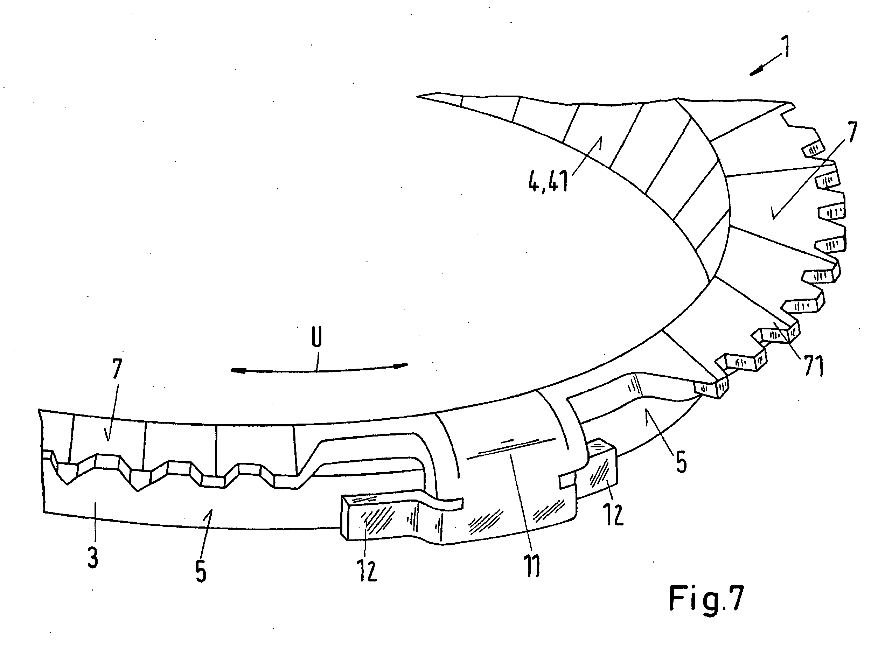

- Fig. 7: ein viertes Ausführungsbeispiel eines erfindungsgemässen Synchronrings;

Die Fig. 1 und Fig. 2, die einen aus dem Stand der Technik bekannten Synchronring zeigen, wurden eingangs bereits ausführlich beschrieben, so dass diese Figuren im Folgenden nicht mehr diskutiert werden müssen.

Fig. 3 zeigt in einer schematischen Darstellung im Schnitt ein Ausführungsbeispiel eines erfindungsgemässen Synchronrings, der im Folgenden gesamthaft mit dem Bezugszeichen 1 bezeichnet wird. Dabei bezeichnen gleiche Bezugszeichen in den verschiedenen Figuren technisch äquivalente Merkmale bzw. beziehen sich auf Merkmale mit technisch äquivalenter Funktion.

Der Synchronring 1 der Fig. 3 umfasst einen konischen Ringkörper 3 mit einer inneren Reibfläche 4 mit Carbon-Reibbelag 41 und einer äusseren Einbaufläche 5, die den Ringkörper 3 in einer radialen Umfangsrichtung in an sich bekannter Weise jeweils begrenzen. Die äussere Einbaufläche 5 und die innere Reibfläche 4 erstrecken sich im wesentlichen parallel zueinander unter einem vorgebbaren Reibwinkel, der in Fig. 1 nicht zu sehen ist, konisch um eine axiale Synchronringachse 6, die in Fig. 3 in einem nicht Massstab gerechten Abstand zur Reibfläche 4 dargestellt ist.

Dabei ist der Ringkörper 3 in axialer Richtung an einem grössten Konusdurchmesser durch eine im wesentlichen sich senkrecht zur Synchronringachse 6 erstreckenden Zahnradfläche 7 mit Zahnrad 71 begrenzt, und an einem kleinsten Konusdurchmesser durch eine Nabenfläche 8 begrenzt, die in der perspektivischen Darstellung der Fig. 3 nicht zu sehen ist. Zur Fixierung des Synchronrings 1 in einem zylindrischen Hohlraum 9 einer Synchronringnabe 10, die in Fig. 3 ebenfalls nicht dargestellt ist, ist eine Verdrehsicherung 11 vorgesehen, die integral mit dem Ringkörper 3 verbunden ist und sich von der Zahnradfläche 7 des Ringkörpers 3 in Richtung zur Nabenfläche 8 erstreckt, eine Konstruktion, wie sie im Prinzip aus dem Stand der Technik bereits bekannt ist. Dabei ist die Verdrehsicherung 11 gemäss Fig. 3 zum Beispiel bei der Herstellung des Synchronrings 1 durch Umbiegen eines vom Ringkörper 3 zunächst noch radial nach aussen stehenden Abschnitts in Richtung zur Einbaufläche 5 gebildet worden.

Das heisst, die Verdrehsicherung 11 erstreckt sich auf der der Synchronringachse 6 abgewandten Seite des Ringkörpers 3 im wesentlichen gleichgerichtet zur Einbaufläche 5.

Wie später anhand der nachfolgenden Figuren noch genauer erläutert werden wird, ist die Verdrehsicherung 11 derart ausgebildet und in Bezug auf die Einbaufläche angeordnet, dass die Verdrehsicherung 11 im Einbauzustand in einer entsprechenden Ausnehmung 101 der Synchronringnabe 10 verankerbar ist.

Erfindungsgemäss ist zur Führung der Einbaufläche 5 an einer Innenfläche 91 des zylindrischen Hohlraums 9 der Synchronringnabe 10, die wie gesagt in Fig. 3 nicht dargestellt ist, weil Fig. 3 den Synchronring 1 nicht im Einbauzustand zeigt, an der Verdrehsicherung 11 ein Führungselement 12 vorgesehen. Das Führungselement 12 ist dabei ein integraler Bestandteil der Verdrehsicherung 11 und erstreckt sich ausgehend von der Verdrehsicherung 11 in der Umfangsrichtung U in zwei entgegen gesetzte Richtungen.

Im Einbauzustand des Synchronrings 1 zentriert und führt das erfindungsgemässe Führungselement 12 den Synchronring 1 sicher und zuverlässig in dem in der Synchronringnabe 10 zur Aufnahme der Einbaufläche 5 vorgesehenen zylindrischen Hohlraum 9.

In Fig. 4 ist eine Seitenansicht eines Synchronrings 1 gemäss Fig. 1 im Einbauzustand schematisch dargestellt. Die in Fig. 4 dargestellte Schnittebene liegt dabei senkrecht zur Synchronringachse 6, die wiederum einem nicht Massstab getreuen abstand eingezeichnet ist.

Der konische Ringkörper 3 mit seiner inneren Reibfläche 4, die im vorliegenden Beispiel einen Carbon-Reibbelag 41 aufweist, und der äusseren Einbaufläche 5, erstrecken sich unter dem Reibwinkel konisch und im wesentlichen parallel zueinander um die axiale Synchronringachse 6 des Synchronrings 1.

Der Synchronring 1 ist durch die erfindungsgemässen Führungselemente 12, die an der Verdrehsicherung 11 vorgesehen sind, mit der Einbaufläche 5 im Hohlraum 9 der Synchronringnabe 10 zentriert gelagert.

Die in Fig. 4 aus Gründen der Übersichtlichkeit nicht dargestellte Zahnradfläche 7 mit Zahnrad 71 befindet sich in an sich bekannter Weise ausserhalb der Synchronringnabe 10, so dass das Zahnrad 71 mit einem weiteren, in Fig. 4 nicht gezeigten Zahnrad eines ebenfalls nicht gezeigten schaltbaren Zahnräderwechselgetriebes in drehfesten Eingriff treten kann.

In den Fig. 5 bis Fig. 7 sind drei weitere spezielle Ausführungsbeispiele erfindungsgemässer Synchronringe schematisch dargestellt, die sich jeweils untereinander bzw. von dem speziellen Ausführungsbeispiel der Fig. 3 nur durch die spezielle Anordnung des Führungselements 12 an der Verdrehsicherung 11 unterscheiden.

Bei dem speziellen Beispiel der Fig. 5 erstreckt sich das Führungselement 12 auf einer der Zahnradfläche 7 abgewandten Seite der Verdrehsicherung 11 entlang der Verdrehsicherung 11 in Umfangsrichtung U. Dadurch steht eine grössere Fläche zur Abstützung des Synchronrings 1 in der Synchronringnabe 10 zur Verfügung, als zum Beispiel bei den Synchronringen 1 der Fig. 3, 6 und 7. Ein Synchronring 1 gemäss Fig. 5 wird man folglich vor allem immer dann wählen, wenn aufgrund der speziellen Umstände eine besonders grosse Abstützfläche zur Abstützung des Synchronrings 1 in der Synchronringnabe 10 gefordert ist.

Bei dem Ausführungsbeispiel gemäss Fig. 6 erstreckt sich das Führungselement 12 in einem Bereich zwischen der Verdrehsicherung 11 und der äusseren Einbaufläche 5 in Umfangsrichtung U, ist also zwischen der Verdrehsicherung 11 und der Einbaufläche 12 angeordnet. Das Beispiel der Fig. 6 ist somit eine Variante, die in axialer Richtung hin zur Synchronringnabe 10 besonders platzsparend ist.

Anhand der Fig. 7 ist eine ganz besondere Variante eines erfindungsgemässen Synchronrings 1 dargestellt, bei welchem die Verdrehsicherung 11 mit dem Führungselement 12 über eine Brücke 14 an einer Haltelasche 15 vorgesehen ist. Diese Art der Konstruktion verleiht dem Führungselement 12 eine gewisse Elastizität unter Druckbelastung in radialer Richtung, so dass der Synchronring 1 auch zum Beispiel unter in radial Richtung zeitlich schwankenden Belastungen sehr laufruhig und sicher geführt ist.

Es versteht sich, dass alle in dieser Anmeldung explizit diskutierten Ausführungsbeispiele nur exemplarisch für die Erfindung zu verstehen sind und insbesondere auch alle geeigneten Kombinationen, die für spezielle Anwendungen vorteilhaft eingesetzt werden können, bzw. alle dem Fachmann nahe liegenden Weiterbildungen durch die Erfindung erfasst sind.

## Patentansprüche

1. Synchronring für eine Synchronisiereinrichtung (2) eines Zahnräderwechselgetriebes, umfassend einen konischen Ringkörper (3) mit einer inneren Reibfläche (4) und einer äusseren Einbaufläche (5), die den Ringkörper (3) in einer radialen Umfangsrichtung (U), die senkrecht zu einer axialen Synchronringachse (6) verläuft, jeweils begrenzen, und sich unter einem vorgebbaren Reibwinkel konisch um die axiale Synchronringachse (6) des Synchronrings erstrecken, wobei der Ringkörper (3) in axialer Richtung an einem grössten Konusdurchmesser durch eine im wesentlichen sich senkrecht zur Synchronringachse (6) erstreckenden Zahnradfläche (7) mit Zahnrad (71) begrenzt ist, und an einem kleinsten Konusdurchmesser durch eine Nabenfläche (8) begrenzt ist, und zur Fixierung des Synchronrings im Einbauszustand in einem zylindrischen Hohlraum (9) einer Synchronringnabe (10) eine Verdrehsicherung (11) vorgesehen ist, die integral mit dem Ringkörper (3) verbunden ist und sich in eine Richtung von der Zahnradfläche (7) des Ringkörpers (3) weg erstreckt, wobei zur Führung der Einbaufläche (5) im zylindrischen Hohlraum (9) an der Verdrehsicherung (11) ein Führungselement (12) vorgesehen ist,
**dadurch gekennzeichnet, dass** das Führungselement (12) sich ausgehend von der Verdrehsicherung (11) in der Umfangsrichtung (U) erstreckt, und dass auf der Reibfläche (4) ein reibungsoptimiertes Reibungsmittel (41), insbesondere eine Reibbeschichtung (41), im speziellen eine Molybdänbeschichtung (41) und / oder ein Reibbelag (41), insbesondere ein Carbon-Reibbelag (41) und / oder ein anderes Reibungsmittel (41) vorgesehen ist.

2. Synchronring nach Anspruch 1, wobei das Führungselement (12) ein integraler Bestandteil der Verdrehsicherung (11) ist.

3. Synchronring nach einem der Ansprüche 1 oder 2, wobei sich das Führungselement (12) in zwei entgegen gesetzte Richtungen erstreckt.

4. Synchronring nach einem der vorangehenden Ansprüche, wobei sich das Führungselement (12) ausgehend von der Verdrehsicherung (11) in der Umfangsrichtung (U) erstreckt, bevorzugt nur in eine Umfangsrichtung (U) erstreckt, wobei insbesondere drei Verdrehsicherungen (11) mit jeweils einem Führungselement (12) vorgesehen ist.

5. Synchronring nach einem der vorangehenden Ansprüche, wobei sich das Führungselement (12) in einem Bereich zwischen der Verdrehsicherung (11) und der äusseren Einbaufläche (5) in Umfangsrichtung (U) erstreckt.

6. Synchronring nach einem der vorangehenden Ansprüche, wobei sich das Führungselement (12) auf einer der Zahnradfläche (7) abgewandten Seite der Verdrehsicherung (11) entlang der Verdrehsicherung (11) in Umfangsrichtung (U) erstreckt.

7. Synchronring nach einem der vorangehenden Ansprüche, wobei die Verdrehsicherung (11) mit dem Führungselement (12) über eine Brücke (14) an einer Haltelasche (15) vorgesehen ist.

8. Synchronring nach einem der vorangehenden Ansprüche, wobei die Zahnradfläche (7) durch eine Ausnehmung (13), insbesondere durch eine, oder zwei, oder drei, oder mehr als drei Ausnehmungen (13) unterbrochen ist, und / oder die Verdrehsicherung (11) in der Ausnehmung (13) mit dem Ringkörper (3) verbunden ist.

9. Synchronring nach einem der vorangehenden Ansprüche, wobei ebenso viele Verdrehsicherungen (11) wie Ausnehmungen (13) in der Zahnradfläche (7), insbesondere genau drei Verdrehsicherungen (11) vorgesehen sind.

10. Synchronring nach einem der vorangehenden Ansprüche, wobei die Verdrehsicherung (11) als Sicherungslasche (111) ausgebildet ist, die sich auf der der Synchronringachse (6) abgewandten Seite des Ringkörpers (3) im wesentlichen gleichgerichtet zur Einbaufläche (5) erstreckt.

11. Synchronring nach einem der vorangehenden Ansprüche, wobei der Synchronring ein aus einem tief ziehbaren Blech hergestelltes Blechumformteil ist und / oder aus einem Stahl, vorzugsweise aus C55, C80 oder C80M Stahl, insbesondere aus C35 oder C45 Stahl gefertigt ist.

12. Zahnräderwechselgetriebe für ein Fahrzeug, insbesondere für einen Personenkraftwagen, einen Transporter oder eine Lastkraftwagen mit einem Synchronring (1) nach einem der vorangehenden Ansprüche.

## Claims

1. A synchronizing ring for a synchronization device (2) of a gear changing transmission, comprising a conical ring body (3) with an inner friction surface (4) and an outer installation surface (5) respectively bounding the ring body (3) in a radial circumferential direction (U) extending perpendicular with respect to an axial synchronizing ring axis (6) and extending conically at a predefinable angle of friction about the axial synchronizing ring axis (6) of the synchronizing ring, wherein the ring body (3) is bounded in the axial direction at a largest cone diameter by a gear wheel surface (7) having a gear wheel (71) and sextending substantially perpendicular to the synchronizing ring axis (6) and at a smallest cone diameter by a hub surface (8) and wherein, for the fixing of the synchronizing ring in a cylindrical cavity (9) of a synchronizing ring hub (10) in an installed state, means providing security against rotation (11) is provided which is integrally connected to the ring body (3) and extends in a direction away from the gear wheel surface (7) of the ring body (3), wherein a guiding element (12) is provided in the cylindrical cavity (9) at the means providing security against rotation (11) for the guidance of the installation surface (5), **characterized in that**
the guiding element (12) extends starting from the means providing security against rotation (11) in the circumferential direction (U); and
**in that** a friction optimized friction medium (41), in particular a friction coating (41), more specifically a molybdenum coating (41) and/or a friction layer (41), in particular a carbon friction layer (41) and/or a different friction medium (41) is provided on the friction surface (4).

2. A synchronizing ring in accordance with claim 1, wherein the guiding element (12) is an integral component of the means providing security against rotation (11).

3. A synchronizing ring in accordance with claim 1 or claim 2, wherein the guiding element (12) extends in two opposite directions.

4. A synchronizing ring in accordance with any one of the preceding claims, wherein the guiding element (12) extends starting from the means providing security against rotation (11) in the circumferential direction (U), preferably only in one circumferential direction (U), with in particular three means providing security against rotation (11) being provided, each having a respective guiding element (12).

5. A synchronizing ring in accordance with any one of the preceding claims, wherein the guiding element (12) extends in a region between the means providing security against rotation (11) and the outer installation surface (5) in the circumferential direction (U).

6. A synchronizing ring in accordance with any one of the preceding claims, wherein the guiding element (12) extends at a side of the means providing security against rotation (11) remote from the gear wheel surface (7) along the means providing security against rotation (11) in the circumferential direction (U).

7. A synchronizing ring in accordance with any one of the preceding claims, wherein the means providing security against rotation (11) having the guiding element (12) is provided via a bridge (14) at a holding lug (15).

8. A Synchronizing ring in accordance with any one of the preceding claims, wherein the gear wheel surface (7) is interrupted by a recess (13), in particular by one, or two, or three, or more than three recesses (13) and/or the means providing security against rotation (11) is connected in the recess (13) to the ring body (3).

9. A synchronizing ring in accordance with any one of the preceding claims, wherein as many means providing security against rotation (11) as recesses (13) are provided in the gear wheel surface (7), in particular exactly three means providing security against rotation (11).

10. A synchronizing ring in accordance with any one of the preceding claims, wherein the means providing security against rotation (11) is formed as a securing lug (111) which extends on the side of the ring body (3) remote from the synchronizing ring axis (6) in essentially the same direction with respect to the installation surface (5).

11. A synchronizing ring in accordance with any one of the preceding claims, wherein the synchronizing ring is a shaped sheet metal part formed from a deep drawning quality metal sheet and/or from a steel, preferably from C55 steel, C80 steel or C80M steel, in particular from C35 steel or C45 steel.

12. A gear changing transmission for a vehicle, in particular for an automobile, a van or a heavy goods vehicle with a synchronizing ring (1) in accordance with any one of the preceding claims.

## Revendications

1. Bague de synchronisation pour un dispositif de synchronisation (2) d'une boite de vitesses, comprenant un corps de bague conique (3) avec une surface de frottement intérieure (4) et une surface de montage extérieure (5), qui délimitent respectivement le corps de la bague (3) dans une direction périphérique radiale (U) qui s'étend perpendiculairement à un axe axial (6) de la bague de synchronisation et s'étendent de façon conique dans un angle de frottement pouvant être prédéfini autour de l'axe axial (6) de la bague de synchronisation, étant entendu que le corps de la bague (3) est délimité dans la direction axiale, au niveau d'un diamètre le plus large du cône, par une surface de roue dentée (7) s'étendant essentiellement perpendiculairement à l'axe (6) de la bague de synchronisation avec une roue dentée (71), et au niveau d'un diamètre le plus faible du cône, par une surface de moyeu (8) et qu'il est prévu dans un espace creux cylindrique (9) d'un moyeu (10) de la bague de synchronisation, aux fins de la fixation de la bague de synchronisation dans la position de montage, une protection contre la torsion (11) qui est reliée d'une seule pièce avec le corps de la bague (3) et s'étend dans une direction opposée à la surface de roue dentée (7) du corps de la bague (3), étant entendu qu'un élément de guidage (12) est prévu sur la protection contre la torsion (11) aux fins du guidage de la surface de montage (5) dans l'espace cylindrique creux (9),
**caractérisée en ce que** l'élément de guidage (12) s'étend dans la direction périphérique (U) à partir de la protection contre la torsion (11) et **en ce qu'**il est prévu sur la surface de frottement (4) un moyen de friction optimisé pour la friction (41), en particulier un revêtement de friction (41), spécialement un revêtement de molybdène (41) et/ou une garniture de friction (41), en particulier une garniture de friction en carbone (41) et/ou un autre moyen de friction (41).

2. Bague de synchronisation selon la revendication 1, dans laquelle l'élément de guidage (12) fait partie intégrante de la protection contre la torsion (11).

3. Bague de synchronisation selon l'une des revendications 1 ou 2, dans laquelle l'élément de guidage (12) s'étend dans deux directions opposées.

4. Bague de synchronisation selon l'une des revendications précédentes, dans laquelle l'élément de guidage (12) s'étend à partir de la protection contre la torsion (11) dans la direction périphérique (U), de préférence seulement dans une direction périphérique (U), étant entendu en particulier qu'il est prévu trois protections contre la torsion (11) comprenant chacune un élément de guidage (12).

5. Bague de synchronisation selon l'une des revendications précédentes, dans laquelle l'élément de guidage (12) s'étend dans la direction périphérique (U) dans une zone comprise entre la protection contre la torsion (11) et la surface de montage extérieure (5).

6. Bague de synchronisation selon l'une des revendications précédentes, dans laquelle l'élément de guidage (12) s'étend dans la direction périphérique (U) sur un côté de la protection contre la torsion (11) opposé à la surface de roue dentée (7) le long de la protection contre la torsion (11).

7. Bague de synchronisation selon l'une des revendications précédentes, dans laquelle la protection contre la torsion (11) est prévue avec l'élément de guidage (12) sur un pont (14) au niveau d'un taquet d'arrêt (15).

8. Bague de synchronisation selon l'une des revendications précédentes, dans laquelle la surface de roue dentée (7) est interrompue par un évidement (13), en particulier par un ou deux ou trois ou plus de trois évidements (13) et/ou la protection contre la torsion (11) est reliée avec le corps de la bague (3) dans l'évidement (13).

9. Bague de synchronisation selon l'une des revendications précédentes, dans laquelle il est prévu le même nombre de protections contre la torsion (11) que d'évidements (13) dans la surface de roue dentée (7), en particulier précisément trois protections contre la torsion (11) .

10. Bague de synchronisation selon l'une des revendications précédentes, dans laquelle la protection contre la torsion (11) est réalisée en tant que taquet de sécurité (111), qui s'étend sur le côté du corps de la bague (3) opposé à l'axe (6) de la bague de synchronisation sensiblement dans la même direction que la surface de montage (5).

11. Bague de synchronisation selon l'une des revendications précédentes, dans laquelle la bague de synchronisation est une pièce formée à la presse à partir d'une tôle emboutissable et/ou est fabriquée à partir d'un acier, en particulier un acier C55, C80 ou C80M, en particulier à partir d'un acier C35 ou C45.

12. Boîte de vitesses pour un véhicule, en particulier pour une voiture particulière, une camionnette ou un poids lourds, comprenant une bague de synchronisation (1) selon l'une des revendications précédentes.
